# FASCICULE DE BREVET EUROPEEN

(11) **EP 1 571 428 B1**
(45) Date de publication et mention de la délivrance du brevet: **08.01.2014**
(21) Numéro de dépôt: 05300126.9
(22) Date de dépôt: 17.02.2005
(51) Int. Cl.: G01F 15/14, G01F 15/18

(54) **Module fixé de manière amovible à un compteur**
An einem Zähler befestigtes lösbares Modul
Modular unit for releasable connection to a meter

(30) Priorité: 24.02.2004 FR 0450337
(43) Date de publication de la demande: 07.09.2005
(73) Titulaire: Actaris S.A.S., 92100 Boulogne-Billancourt (FR)
(72) Inventeur: Cros, Alain, 71680 CRECHES SUR SAONE (FR); Demia, Laurent, 01120 MONTLUEL (FR)
(74) Mandataire: Howson, Richard G.B.

(56) Documents cités:
- EP-A- 0 468 236
- EP-A- 1 026 481
- EP-A- 1 103 917
- WO-A-01/76338
- DE-A- 10 214 418
- PATENT ABSTRACTS OF JAPAN vol. 2002, no. 03, 3 avril 2002 (2002-04-03) & JP 2001 330495 A (AICHI TOKEI DENKI CO LTD), 30 novembre 2001 (2001-11-30)

## Description

La présente invention concerne la fixation d'un module à un compteur, notamment un compteur d'eau. Le module peut être un module de lecture à distance du compteur. L'invention a pour objet un module, un compteur et un dispositif consistant en l'association dudit module avec ledit compteur.

La lecture des compteurs de gaz, d'eau et d'électricité est effectuée de façon classique par des releveurs qui se déplacent au moins une fois par an aux domiciles des personnes où se trouvent les compteurs. La lecture de ces compteurs permet de facturer aux consommateurs les quantités d'électricité et de fluide réellement consommées pendant un intervalle de temps déterminé. Cependant cette lecture à domicile rencontre des difficultés. Ainsi les personnes concernées ne sont pas toujours présentes à leurs domiciles et le releveur ne peut pas accéder aux compteurs. De plus, les personnes ont fréquemment un emploi, en dehors de leurs domiciles, ce qui réduit les plages horaires pendant lesquels les releveurs peuvent intervenir. Egalement, des accidents se produisent régulièrement, provoqués par des agressions ou des morsures d'animaux, notamment de chiens, dont sont victimes les releveurs de compteurs.

Pour toutes ces raisons, la tendance est actuellement d'effectuer les lectures de compteurs à distance. Pour cela, on utilise différents procédés, par exemple par radio, par ligne téléphonique ou par câble. Il est cependant nécessaire d'équiper les compteurs de moyens permettant une telle lecture à distance (souvent appelé "télérelevé"). Certains compteurs sont actuellement munis de tels moyens pendant leur fabrication et sont donc installés prêts à être lus par télérelevé. Pour les compteurs d'électricité, ceci ne pose guère de difficultés puisque ces compteurs possèdent déjà une source d'énergie, l'électricité. Par contre, pour les compteurs de gaz ou d'eau, il est nécessaire de les munir d'un module de communication ayant une source d'énergie autonome, une pile par exemple. Ce module est donc cher et il n'est généralement pas économiquement justifié d'équiper les compteurs de tels modules en cours de fabrication. La solution consiste alors à pré-équiper les compteurs de moyens permettant la fixation, immédiatement en usine ou la plupart du temps ultérieurement, des modules de télérelevé sur les compteurs, selon les besoins.

De plus, les modules sont généralement fixés de façon amovible sur les compteurs, ce qui permet, sans avoir à changer les compteurs, de changer les modules pour des raisons imposées par des contraintes administratives ou technologiques. En Allemagne par exemple, il est nécessaire de remplacer tous les cinq ans la partie de mesure des compteurs d'eau par des éléments neufs.

Pour les compteurs d'eau, le totalisateur est muni d'un petit disque qui tourne à une vitesse de rotation proportionnelle à la consommation instantanée. Le module de télérelevé est équipé d'un capteur de mesure optique, magnétique, capacitif ou inductif qui détecte et enregistre cette vitesse de rotation.

Deux solutions sont actuellement utilisées pour ajouter un module à un compteur: le module se fixe soit au-dessus du totalisateur, ce qui ajoute un volume supplémentaire et ce qui n'est donc pas toujours possible pour des raisons d'encombrement et/ou d'esthétisme, soit dans un logement du totalisateur spécialement conçu pour recevoir le module. Dans ce dernier cas, le module est intégré au totalisateur. Pour fixer le module au totalisateur, le module est amené latéralement, sur le coté du compteur, pour être clipser au totalisateur. Cependant, il arrive fréquemment que le compteur soit monté sur la canalisation d'eau dans un endroit difficilement accessible et surtout dans un endroit restreint où le déplacement latéral du module est compliqué, voir même impossible. De plus, certaines architectures de compteurs ne permettent pas le montage du module en amenant le module latéralement.

DE10214418 décrit un compteur volumétrique. Un couvercle (64) est placé sur le boîtier du compteur ou compteur boîtier de mécanisme (36,38), en ce qu'il est place perpendiculairement à la surface d'affichage. Un module transmetteur (68) et un capteur de signaux (66) sont disposés sur le couvercle. Le boîtier du mécanisme compteur comporte au moins deux ouvertures, desquelles la forme et la taille sont adaptées à celles de l'enregistrement de signal et le module d'émetteur. Les signaux captés par le capteur de signaux sont transférés au module émetteur.

EP1103917 décrit un compteur. Le compteur possède un boîtier de compteur (1) renfermant le mécanisme de compteur et un module de fixation (2) pour permettre la lecture à distance des données des compteurs, comportant un boîtier de module (4) qui comprend une saillie (6) qui s'insère dans un évidement correspondant (7) du boîtier de compteur, avec une saillie de rétention (8) positionnée derrière une arête de rétention (9), lors d'un mouvement latéral du boîtier de module.

EP1026481 décrit un compteur de liquides. Le dispositif comporte un sous-boîtier (2) pour raccordement à une canalisation (21), un boîtier du mécanisme compteur (3) avec un mécanisme compteur (4), un élément d'affichage (6) dans le cas échéant et un boîtier auxiliaire (7) d'un module d'échantillonnage (8) combinés pour former une unité avec le boîtier du mécanisme compteur. Le boîtier auxiliaire du module d'échantillonnage peut être inséré dans un évidement dans le boîtier du mécanisme compteur.

WO 01/76338 décrit un procédé et appareil pour abriter l'électronique de compteur de sécurité intrinsèque en ce qu'un boîtier est formé par un ou plusieurs éléments (200-210) fixées et scellées avec un mécanisme de verrouillage à came (300). Des éléments composants du boîtier sont fixés à l'aide d'un assemblage à emboîtement par lequel un premier élément s'associe à un deuxième élément en utilisant un ensemble de surfaces qui glissent le long l'un l'autre pour former une liaison mécanique étanche. Les surfaces sont configurés de telle sorte qu'un mouvement de torsion rapproche les éléments dans une liaison mécanique robuste. Un joint d'étanchéité (306) est placé entre les membres au niveau des surfaces des éléments (200-210), en ce qu'il forme un boîtier étanche pour l'électronique de sécurité intrinsèque lorsque les membres sont accouplés.

L'invention est définie selon les revendications ci-après.

La présente invention vise à résoudre le problème exposé précédemment.

De façon plus précise, l'invention a pour objet un module apte à être fixé de façon amovible dans un logement d'un totalisateur d'un compteur, ce module comportant des moyens de fixation verticale et des moyens de fixation latérale du module.

L'invention a également pour objet un compteur comprenant un totalisateur muni d'un logement apte à recevoir un module, le compteur comportant des moyens pour positionner et fixer verticalement le module dans le logement et des moyens pour positionner et fixer latéralement le module dans le logement.

Un autre objet de l'invention est un dispositif consistant en l'association dudit module avec ledit compteur.

Selon le mode de réalisation préféré, les moyens de fixation verticale comportent des moyens pour clipser verticalement le module sur le totalisateur.

Lesdits moyens pour clipser le module comportent avantageusement un évidemment destiné à coopérer avec un ergot solidaire du totalisateur, l'ergot se clipsant dans ledit évidemment, lequel peut prendre la forme d'un trou de serrure, ce qui permet de guider verticalement le module au cours de son positionnement sur le totalisateur.

Ledit évidemment peut être pratiqué dans une saillie, laquelle est apte à s'insérer dans une encoche du totalisateur, ladite encoche comprenant ledit ergot.

Les moyens de fixation latérale comportent, selon un mode de réalisation préféré, deux rainures sensiblement diamétralement opposées sur la paroi intérieure du module et aptes à coopérer avec des renflements situés sensiblement diamétralement opposés sur le pourtour extérieur du totalisateur.

D'autres avantages et caractéristiques de l'invention apparaîtront au cours de la description qui va suivre d'un mode de réalisation, donné à titre d'exemple non limitatif, en référence aux dessins annexés et sur lesquels :
- les figures 1 A et 1B illustrent le procédé selon l'invention;
- la figure 2 montre un exemple d'architecture d'un compteur pour laquelle le procédé de fixation verticale d'un module, selon l'invention, doit être appliqué;
- les figures 3A et 3B montrent des vues en perspective d'un autre mode de réalisation de l'invention, et
- la figure 4 représente schématiquement une autre forme de réalisation des moyens de fixation verticale.

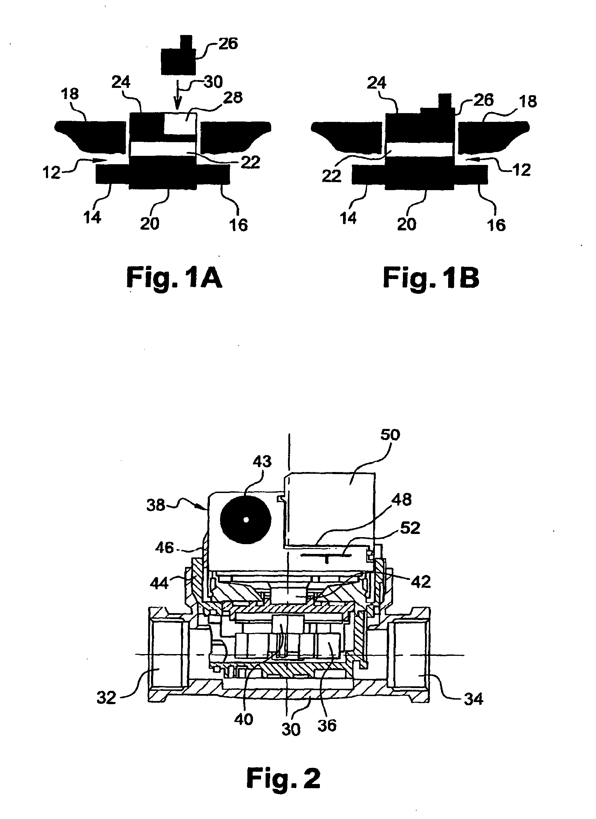

Les figures 1A et 1 B montrent schématiquement un compteur d'eau 12 monté sur une canalisation d'eau à l'aide d'une tubulure d'entrée 14 et d'une tubulure de sortie 16. Le compteur est monté à travers une paroi 18. Il comprend un corps de compteur 20 réalisé habituellement en laiton. Une capsule 22 intégrant la partie de mesure est fixée de façon amovible au corps de compteur 20. La partie de mesure contient essentiellement une turbine ou un piston mis en rotation par l'écoulement de l'eau traversant le compteur. Un totalisateur 24 est monté de façon amovible sur la capsule 22. Ce totalisateur enregistre la consommation d'eau sur une période déterminée et comprend un petit disque qui tourne à une vitesse de rotation proportionnelle au débit instantané de l'eau traversant le compteur. Afin de mesurer à distance la consommation d'eau, un module de télérelevé 26 est inséré dans un logement 28 du totalisateur. Ce module 26 inclut des moyens permettant de détecter la rotation du petit disque et de communiquer à distance des données relatives à la consommation d'eau.

Le module 26, selon la méthode de l'art antérieur, devrait être inséré latéralement dans le logement 28. Cependant, comme illustré sur les figures 1 A et 1 B, la paroi 18 empêche une telle installation. Selon la présente invention, le module est installé verticalement en plaçant le module 26 comme illustré sur la figure 1 A, puis en le déplaçant de haut en bas selon la flèche 30. Le module est alors installé comme représenté sur la figure 1 B.

La figure 2 représente un compteur d'eau dont l'architecture nécessite l'installation par le haut d'un module, l'installation latéralement n'étant pas possible. Ce compteur comporte un corps de compteur 30 avec une tubulure d'entrée d'eau 32 et une tubulure de sortie 34. A l'intérieur du corps est fixée une capsule de mesure contenant une turbine 36. Le mouvement de rotation de la turbine est communiqué à un totalisateur 38 par l'intermédiaire d'un entraînement magnétique comprenant deux aimants 40 et 42. Le totalisateur comporte un mécanisme à engrenages et rouleaux 43 affichant la consommation d'eau .La capsule de mesure est fixée au corps du compteur à l'aide de deux bagues concentriques 44 et 46. La première bague 44 maintient la capsule dans le corps du compteur. La deuxième bague a pour fonction de faciliter le démontage de la capsule de mesure, laquelle doit être remplacée régulièrement selon la législation de certains pays.

Le totalisateur 38 comporte un logement 48 destiné à accueillir un module 50.

Ce module est avantageusement un module de télérelevé, qui détecte la vitesse de rotation d'un disque représenté schématiquement par la référence 52 et qui délivre des signaux permettant de déterminer la vitesse de rotation du disque.

Les deux bagues 44 et 46 empêchent l'accès latéral du module 50. Selon l'invention, le module est alors fixé au totalisateur 38 de façon verticale, de préférence à l'aide d'un ou plusieurs clips.

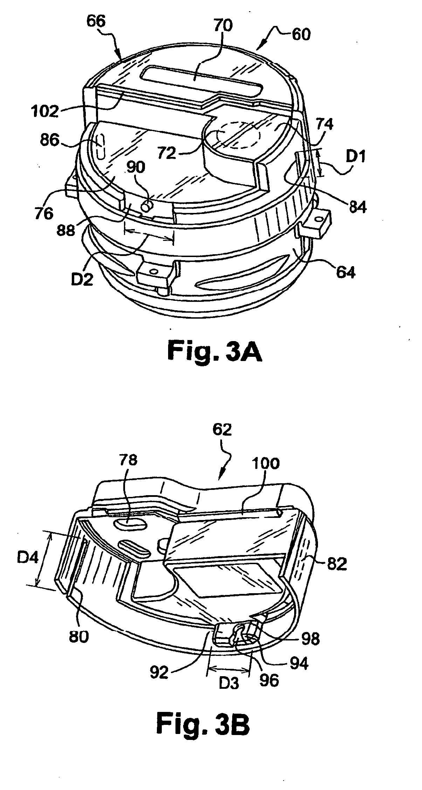

Le mode de réalisation représenté sur les figures 3A et 3B et décrit ci-après concerne plus spécialement les compteurs d'eau, bien que l'invention s'applique également à d'autres types de compteurs tels que les compteurs de gaz. La figure 3A montre un compteur d'eau 60 et la figure 3B un module de télérelevé 62 destiné à être fixé au compteur 60. Ce mode de réalisation permet l'installation du module latéralement, ce qui est la pratique de l'art antérieur, mais aussi verticalement selon la présente invention.

Le compteur 60 comporte une base 64 généralement en laiton qui inclut la partie de mesure (non représentée) du compteur. Cette partie comporte principalement une turbine ou un piston oscillant qui est mis en mouvement de rotation sous l'effet de l'écoulement de l'eau dans le compteur. Un totalisateur 66 est monté sur la base 64. Le totalisateur enregistre la consommation d'eau qui peut être lue à travers une fenêtre 70. Le totalisateur comprend aussi un petit disque 72, visible à travers une fenêtre transparente 74 du totalisateur. Le disque 72 tourne à une vitesse proportionnelle au débit de l'eau s'écoulant dans le compteur. Il est muni d'une ou plusieurs marques qui permettent de détecter sa rotation et d'en mesurer sa vitesse. Le totalisateur comporte un logement 76 destiné à recevoir un module, et notamment le module de télérelevé 62 de la figure 3B.

Le module 62 comporte un détecteur optique (non représenté) détectant et mesurant la rotation du disque 72 à travers le trou 78. Le module 62 se positionne donc sur le totalisateur de sorte que le trou 78 soit en regard du disque 72. Dans une autre forme de réalisation, le détecteur est un capteur magnétique, inductif ou capacitif et dans ce cas le trou 78 n'est pas nécessaire et la fenêtre 74 peut être remplacée par une paroi optiquement opaque. Le module 62 comporte également des moyens électroniques pour le traitement des signaux émis par le détecteur optique et pour la communication du module avec un poste central situé dans les locaux de la société assurant le télérelevé des compteurs. Cette communication peut être par exemple par radio ou par des techniques filaires.

La fixation du module 62 sur le totalisateur 66, et plus généralement sur le compteur 60, s'effectue de façon sélective, c'est-à-dire que les moyens de fixation ont été conçus pour que seuls les modules munis de ces moyens permettent de fixer le module 62 au compteur 60. Ces moyens sont également conçus pour que le module puisse être amovible, donc enlevé du totalisateur relativement aisément.

Ces moyens de fixation sont formés de moyens de "fixation latérale" (le module étant amené latéralement) et de moyens de "fixation verticale" (le module étant amené verticalement). Les moyens de fixation latérale sont constitués de deux rainures ou fentes rectilignes 80 et 82 disposées diamétralement opposées sur la surface intérieure du pourtour du module et coopérant avec des renflements en forme de bourrelets rectilignes respectivement 84 et 86 situés diamétralement opposés sur la surface extérieure du totalisateur. Les moyens de fixation vertical sont constitués d'une encoche 88 avec un ergot 90 coopérant avec une saillie en relief 92 munie d'un évidemment en forme de trou de serrure 94. Ce dernier comporte deux parties : un canal 96 de forme évasée (pour un trou de serrure, partie par laquelle passe le panneton d'une clé) et un logement cylindrique 98 (pour un trou de serrure, partie par laquelle passe la tige d'une clé).

En approchant latéralement le module 62 vers le totalisateur 66, de la gauche vers la droite sur la figure 3A, pour positionner le module 62 dans le logement 76, les deux rainures 80 et 82 viennent se "clipser", se positionner en s'agrippant, dans les renflements respectivement 84 et 86. De plus, la saillie 92 vient se loger dans l'encoche 88 et l'ergot 90 dans le logement cylindrique 98.

Pour positionner le module dans son logement 76, il est nécessaire, d'une part, que la longueur D4 des rainures 80 et 82 soit supérieure à la longueur D1 respectivement des renflements 84 et 86. De façon générale, il est nécessaire que la rainure 80 et le renflement 84 soient de formes complémentaires ou interpénétrantes; il en est de même de la rainure 82 et du renflement 86. Ces rainures forment ainsi une paire de clés mécaniques vis-à-vis des renflements 84 et 86.

Pour pouvoir loger le module 62 dans son logement 76, il est aussi nécessaire que la largeur D2 de l'encoche 88 soit supérieure à la largeur D3 de la saillie 92. La saillie 92 forme ainsi une clé mécanique pour l'encoche 88.

De plus, pour pouvoir loger le module 62 dans son logement 76, d'une part le logement cylindrique 98 doit se positionner en regard de l'ergot 90 et, d'autre part, le diamètre de l'ergot 90 doit être inférieur au diamètre du logement cylindrique 98 pour que l'ergot puisse pénétrer dans le logement cylindrique 98. On forme ainsi une autre clé mécanique.

Le mode de réalisation des figures 3A et 3B comporte quatre clés mécaniques : deux clés par les rainures 80 et 82 et les renflements 84 et 86, une clé par l'encoche 88 et la saillie 92 et une clé par l'ergot 90 et le logement cylindrique 98.

Pour être fixé au compteur, le module 62 peut être déplacé de deux façons différentes. Il peut tout d'abord être amené latéralement, par le côté, de gauche à droite sur la figure 3A, pour se positionner dans le logement 76. Les renflements 84 et 86 viennent se clipser dans les rainures respectivement 80 et 82, l'ergot 90 venant simplement se positionner dans le logement cylindrique 98. On obtient ainsi la fixation latérale. Cependant, il n'est pas toujours possible de déplacer latéralement le module. Par exemple, le compteur peut être monté sur une canalisation d'eau contre une paroi ou dans une paroi (comme illustré sur les figures 1 A et 1B) ou à l'angle de deux murs.

Selon le mode de réalisation représenté sur les figures 3A et 3B, le module peut être amené verticalement, de haut en bas, pour se fixer dans son logement 76. L'extrémité du canal 96 adjacente au logement cylindrique 98 a une largeur très légèrement inférieure au diamètre de l'ergot 90. De ce fait, après avoir été guidé verticalement par le canal 96 de l'évidemment en forme de trou de serrure, l'ergot vient se clipser dans le logement cylindrique 98. On obtient ainsi la fixation verticale. Au cours de ce positionnement, les rainures 80 et 82 glissent le long des renflements 84 et 86 et la saillie 92 se positionne dans l'encoche 88. L'ergot assure donc le maintien vertical du module alors que les rainures 80-82 et les renflements 84-86 assurent le maintien horizontal.

Le module comporte également une zone profilée 100 destinée à être clipsée sur le bord 102 du totalisateur. Un chanfrein permet un clipsage vertical plus aisé.

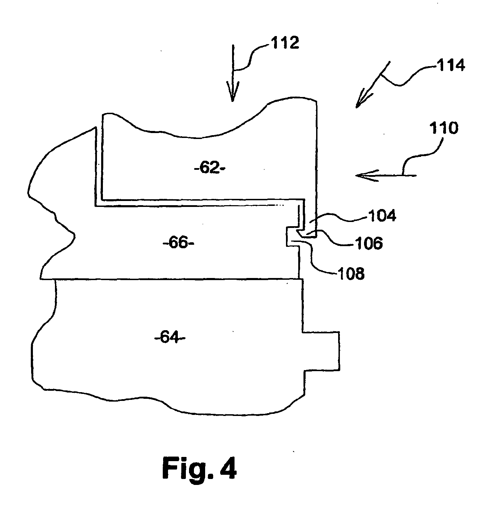

La figure 4 représente schématiquement un autre mode de réalisation des moyens de fixation verticale. Sur cette figure, le totalisateur 66 est monté sur le corps du compteur 64. L'ergot 90 et l'encoche 88 du totalisateur et l'évidemment 94 et la saillie 92 du module représentés sur les figures 3A et 3B sont remplacés sur la figure 4 par un ou plusieurs doigts élastiques 104 terminés chacun par un crochet 106 qui se clipse dans une gorge 108 pratiquée sur le pourtour du totalisateur. En principe, un seul doigt élastique 104 suffit mais il peut être avantageux d'avoir plusieurs doigts répartis au plus sur une demie circonférence. Il en est de même de la gorge 108 : il peut s'agir d'une seule gorge dont la longueur dépend de l'espacement maximal entre les doigts de sorte que chaque doigt puisse se clipser dans la gorge ou il peut s'agir de plusieurs gorges, chacune d'elles correspondant à l'un des doigts élastiques 104. On a donc ainsi une ou plusieurs clés mécaniques, chacune étant formée d'un doigt élastique et d'une gorge.

Cette forme de réalisation permet, tout comme celle représentée sur les figures 3, de positionner et de venir clipser le module 62 sur le totalisateur 66 soit latéralement horizontalement, soit verticalement, soit selon toute position intermédiaire comprise entre les positions horizontale et verticale, comme illustré par les flèches respectivement 110, 112 et 114.

Le module peut être un module autre qu'un module de télérelevé, par exemple un module de détection de fraude.

## Revendications

1. Module de lecture à distance apte à être fixé de façon amovible dans un logement (76) d'un totalisateur (66) d'un compteur (60) d'eau, d'électricité ou de gaz, comportant des moyens de fixation (94, 96, 98, 104, 80, 82) pour positionner et fixer ledit module dans ledit logement, **caractérisé en ce que** les moyens de fixation sont formés de moyens (94, 96, 98, 104) pour clipser verticalement le module (62) sur le totalisateur (66) et de moyens (80, 82) pour clipser latéralement ledit module (62) sur ledit totalisateur (66), **en ce que** lesdits moyens pour clipser verticalement ledit module comportent un évidement (94) destiné à coopérer avec un ergot (90) solidaire dudit totalisateur (66), ledit ergot pouvant se clipser dans ledit évidement, et **en ce que** ledit évidement (94) a la forme d'un trou de serrure, ce qui permet de guider verticalement ledit module (62) au cours de son positionnement sur ledit totalisateur (66).

2. Module selon l'une des revendications 1 **caractérisé en ce qu'**il comporte une saillie (92) comprenant ledit évidement (94), ladite saillie étant apte à s'insérer dans une encoche (88) dudit totalisateur (66), ladite encoche comprenant ledit ergot (90).

3. Module selon la revendication 1 ou 2 **caractérisé en ce que** lesdits moyens pour clipser latéralement le module comportent deux rainures (80, 82) sensiblement diamétralement opposées sur la paroi intérieure du module et aptes à coopérer avec des renflements (84, 86) situés sensiblement diamétralement opposées sur le pourtour extérieur dudit totalisateur (66).

4. Compteur d'eau, d'électricité ou de gaz comprenant un totalisateur (60) muni d'un logement (76) apte à recevoir un module (62) de lecture à distance, comportant des moyens (88, 90,84, 86) pour positionner et fixer ledit module dans ledit logement, **caractérisé en ce que** les moyens de fixation sont formés de moyens (90) pour clipser verticalement le module (62) sur ledit totalisateur (66) et de moyens (84, 86) pour clipser latéralement ledit module (62) sur ledit totalisateur (66) et **en ce que** lesdits moyens pour clipser verticalement ledit module (62) sur ledit totalisateur comportent un ergot (90) solidaire dudit totalisateur (66) destiné à coopérer avec un évidement (94), ledit ergot pouvant se clipser dans ledit évidement, et **en ce que** ledit évidement (94) a la forme d'un trou de serrure, ce qui permet de guider verticalement ledit module (62) au cours de son positionnement sur ledit totalisateur (66)

5. Compteur selon la revendication 4 **caractérisé en ce que** ledit totalisateur (66) comporte une encoche (88) comprenant ledit ergot (90) et apte à recevoir une saillie (92) dudit module (62), ladite saillie (92) comprenant ledit évidement (94).

6. Compteur selon la revendication 4 ou 5 **caractérisé en ce que** lesdits moyens pour clipser latéralement le module comportent des renflements (84, 86) situés sensiblement diamétralement opposées sur le pourtour extérieur du totalisateur (66) et aptes a coopérer avec deux rainures (80, 82) sensiblement diamétralement opposées sur la paroi intérieure dudit module (62).

## Patentansprüche

1. Fernablesemodul, das geeignet ist, abnehmbar in einer Lagerung (76) eines Zählwerks (66) eines Wasser-, Strom- oder Gaszählers (60) befestigt zu werden, mit Befestigungsmitteln (94, 96, 98, 104, 80, 82), um das Modul in der Lagerung zu positionieren und zu befestigen, **dadurch gekennzeichnet, dass** die Befestigungsmittel von Mitteln (94, 96, 98, 104), um das Modul (62) vertikal auf das Zählwerk (66) zu klipsen, und von Mitteln (80, 82), um das Modul (62) seitlich auf das Zählwerk (66) zu klipsen, gebildet sind, dass die Mittel, um das Modul vertikal zu klipsen, eine Aussparung (94) umfassen, die dazu bestimmt ist, mit einem Haken (90) zusammenzuwirken, der mit dem Zählwerk (66) verbunden ist, wobei der Haken in die Aussparung geklipst werden kann, und dass die Aussparung (94) die Form eines Schlüsselloches hat, wodurch es möglich ist, das Modul (62) während seiner Positionierung auf dem Zählwerk (66) vertikal zu führen.

2. Modul nach Anspruch 1, **dadurch gekennzeichnet, dass** es einen Vorsprung (92) aufweist, der die Aussparung (94) aufweist, wobei der Vorsprung geeignet ist, sich in eine Kerbe (88) des Zählwerks (66) einzufügen, wobei die Kerbe den Haken (90) aufweist.

3. Modul nach Anspruch 1 oder 2, **dadurch gekennzeichnet, dass** die Mittel zum seitlichen Klipsen des Moduls zwei im Wesentlichen diametral gegenüber liegende Nuten (80, 82) an der Innenwand des Moduls aufweisen, die geeignet sind, mit Erhebungen (84, 86) zusammenzuwirken, die sich im Wesentlichen diametral gegenüber liegend auf dem äußeren Umfang des Zählwerks (66) befinden.

4. Wasser-, Strom- oder Gaszähler, umfassend ein Zählwerk (60), das mit einer Lagerung (76) versehen ist, die geeignet ist, ein Fernablesemodul (62) aufzunehmen, mit Mitteln (88, 90, 84, 86), um das Modul in der Lagerung zu positionieren und zu befestigen, **dadurch gekennzeichnet, dass** die Befestigungsmittel von Mitteln (90) gebildet sind, um das Modul (62) vertikal auf das Zählwerk (66) zu klipsen, und von Mitteln (84, 86), um das Modul (62) seitliche auf das Zählwerk (66) zu klipsen, und dass die Mittel, um das Modul (62) vertikal auf das Zählwerk zu klipsen, einen Haken (90) aufweisen, der mit dem Zählwerk (66) verbunden und dazu bestimmt ist, mit einer Aussparung (94) zusammenzuwirken, wobei der Haken in die Aussparung geklipst werden kann, und dass die Aussparung (94) die Form eines Schlüsselloches hat, wodurch es möglich ist, das Modul (62) während seiner Positionierung auf dem Zählwerk (66) Vertikal zu führen.

5. Zähler nach Anspruch 4, **dadurch gekennzeichnet, dass** das Zählwerk (66) eine Kerbe (88) aufweist, die den Haken (90) aufweist und geeignet ist, einen Vorsprung (92) des Moduls (62) aufzunehmen, wobei der Vorsprung (92) die Aussparung (94) aufweist.

6. Zähler nach Anspruch 4 oder 5, **dadurch gekennzeichnet, dass** die Mittel zum seitlichen Klipsen des Moduls Erhebungen (84, 86) umfassen, die sich im Wesentlichen diametral gegenüber liegend auf dem äußeren Umfang des Zählwerks (66) befinden und geeignet sind, mit zwei Nuten (80, 82) zusammenzuwirken, die diametral gegenüber liegend an der Innenwand des Moduls (62) vorgesehen sind.

## Claims

1. Remote reading module capable of being fixed removably in a housing (76) of a totaliser (66) of a water, electricity or gas meter (60), including fixing means (94, 96, 98, 104, 80, 82) for positioning and fixing the said module in the said housing, **characterised in that** the fixing means are formed by means (94, 96, 98, 104) for vertically clipping the module (62) on the totaliser (66) and means (80 , 82) for laterally clipping the said module (62) on the said totaliser (66), **in that** the said means for vertically clipping the said module include a recess (94) intended to co-operate with a lug (90) integral with the said totaliser (66), the said lug being capable of being clipped in the said recess, and **in that** the said recess (94) has the shape of a keyhole, which makes it possible to guide the said module (62) vertically in the course of its positioning on the said totaliser (66).

2. Module as claimed in Claim 1, **characterised in that** it includes a projection (92) comprising the said recess (94), the said projection being capable of being inserted into a notch (88) in the said totaliser (66), the said notch comprising the said lug (90).

3. Module as claimed in Claim 1 or 2, **characterised in that** the said means for laterally clipping the module include two grooves (80, 82) substantially diametrically opposed on the internal wall of the module and capable of co-operating with bulges (84, 86) situated substantially diametrically opposed on the external periphery of the said totaliser (66).

4. Water, electricity or gas meter comprising a totaliser (60) equipped with a housing (76) capable of receiving a remote reading module (62), including means (88, 90,84, 86) for positioning and fixing the said module in the said housing, **characterised in that** the fixing means are formed by means (90) for vertically clipping the module (62) on the said totaliser (66) and means (84, 86) for laterally clipping the said module (62) on the said totaliser (66), and **in that** the said means for vertically clipping the said module (62) on the said totaliser include a lug (90) integral with the said totaliser (66) intended to be clipped in the said recess, and **in that** the said recess (94) has the shape of a keyhole, which makes it possible to guide the said module (62) vertically in the course of its positioning on the said totaliser (66).

5. Meter as claimed in Claim 4, **characterised in that** the said totaliser (66) includes a notch (88) comprising the said lug (90) and capable of receiving a projection (92) from the said module (62), the said projection (92) comprising the said recess (94).

6. Meter as claimed in Claim 4 or 5, **characterised in that** the said means for laterally clipping the module include bulges (84, 86) situated substantially diametrically opposed on the external periphery of the said totaliser (66) and capable of co-operating with two grooves (80, 82) substantially diametrically opposed on the internal wall of the said module (62).
